# EUROPÄISCHE PATENTANMELDUNG

(11) **EP 0 835 856 A2**
(43) Veröffentlichungstag der Anmeldung: **15.04.1998**
(21) Anmeldenummer: 97117390.1
(22) Anmeldetag: 08.10.1997
(51) Int. Cl.: C05F 17/00, C05F 17/02

(54) **Verfahren und Einrichtung zum Behandeln eines biologisch aktiven, auf eine Bodenfläche schüttbaren Haufwerks**

(30) Priorität: 09.10.1996 AT 1783/96; 03.07.1997 AT 1142/97
(71) Anmelder: Thöni Industriebetriebe Gesellschaft m.b.H., 6410 Telfs (AT)
(72) Erfinder: Baumann, Anton-Rupert, 88239 Wangen (DE); Mederle, Anton, 6410 Telfs (AT)
(74) Vertreter: Hofinger, Engelbert, DDr.

(57) **Zusammenfassung**

Zum Behandeln eines biologisch aktiven Haufwerks, beispielsweise zum Trocknen von Lebensmitteln oder Agrarprodukten, zum Kompostieren von Abfällen, Klärschlamm od.dgl., wird auf eine Bodenfläche (2) zumindest ein herausziehbarer Schlauch (3) mit seitlichen Öffnungen (10) aufgelegt, das zu behandelnde Haufwerk (1) auf der Bodenfläche verteilt und durch den mit einer Luftquelle (6) verbundenen Kanal belüftet. Bei vergrößertem Luftbedarf wird der Schlauch (3) aus dem Haufwerk (1) herausgezogen und die Luft durch einen zweiten Schlauch (3') mit höheren Luftdurchsatzfähigkeiten zugeführt.

## Beschreibung

Die Erfindung betrifft ein Verfahren und eine Einrichtung zum Behandeln eines biologisch aktiven, auf eine Bodenfläche schüttbaren Haufwerks, beispielsweise zum Trocknen von Lebensmitteln oder Agrarprodukten, zum Kompostieren von Abfällen, Klärschlamm od.dgl., wobei über einen auf die Bodenfläche aufgelegten Belüftungskanal mit seitlichen Öffnungen Luft in das Haufwerk eingeblasen wird, und der Belüftungskanal vor Entfernung des behandelten Haufwerks aus dem Haufwerk herausgezogen wird.

Für die Be- und Entlüftung von Kompostmieten od. dgl. ist es bekannt (DE-U 9410664), Belüftungskanäle auf einer Bodenfläche oberirdisch zu verlegen, die von dem zu kompostierenden Gut überdeckt werden. Die Kanäle bestehen aus auf dem Boden auflegbaren Rinnen, die mit einer durchbrochene Bereiche aufweisenden Abdeckung und endseitigen Abschlüssen mit einem Anschlußstutzen versehen sind. Die Kanäle ermöglichen das Zuführen von Luft und eine Ableitung von Flüssigkeit, weiters auch eine Trocknung oder Befeuchtung des Gutes. Zwischen den einzelnen Rinnen sind Verbindungen vorgesehen, sodaß sie auf beliebig langen Mieten verlegt werden können. Weiters werden für die Mietenbelüftung auch gelochte Rohre verwendet, die miteinander verschraubt sind (DE-U 29500726). Sowohl Rinnen als auch gelochte Rohre sind im allgemeinen nur auf befestigte Böden auflegbar. Um die Bearbeitung und Entnahme des kompostierten Gutes zu ermöglichen, und die Belüftungsvorrichtung durch die notwendigen Maschinen nicht zu beschädigen, werden die Rinnen bzw. Rohre vor Entfernung der behandelten Abfallprodukte herausgezogen. Das Herausziehen bereitet aber oft Probleme aufgrund der großen Reibungskräfte, zu schwachen Verbindungen, usw.

Die Erfindung hat es sich nun zur Aufgabe gestellt, ein Verfahren und eine Einrichtung der eingangs genannten Art zu schaffen, wobei das Verlegen und das Herausziehen der Belüftungskanäle wesentlich erleichtert ist. Erfindungsgemäß wird dies dadurch erreicht, daß jeder Belüftungskanal durch einen Schlauch gebildet ist.

Für die Behandlung eines biologisch aktiven Haufwerkes kann somit auf eine beliebige Bodenfläche zumindest ein Schlauch ausgerollt und mit einem Gebläse verbunden werden. Auf größere Flächen können mehrere Schläuche parallel ausgelegt werden, wobei bevorzugt jeder Schlauch mit einem eigenen Gebläse verbunden wird. Für eine besonders gleichmäßige Belüftung können auch mehrere Schläuche einander kreuzend auf der Bodenfläche verlegt werden. In einer bevorzugten Ausführung wird jeder Schlauch vor der Verteilung des Haufwerks unter Druck gesetzt und der Druckanstieg in den Schläuchen läßt diese ihren Querschnitt etwas vergrößern, worauf dann das zu behandelnde Material darüber gehäuft wird. Das Gebläse bleibt zumindest 2 bis 3 Tage eingeschalten, bis sich das Haufwerk stabilisiert hat. Anschließend kann das Gebläse in Intervallen nach Bedarf laufen. Das Haufwerk bildet um jeden Schlauch eine Art von Tunnel, der nach der Stabilisierung auch im drucklosen Zustand des Schlauchs (in den Gebläsepausen) bestehen bleibt. Sobald eine Zwangsbelüftung nicht mehr notwendig ist, können die auf Normalquerschnitt verringerten Schläuche problemlos von Hand aus dem Haufwerk gezogen werden. Auf diese Weise werden die Reibungskräfte zwischen der Kanalwandung und dem aufliegenden Material herabgesetzt und eventuell bereits anhaftendes Material durch die Bewegung gelockt, sodaß der Kanal ohne große Schwierigkeiten aus dem Haufwerk herausgezogen werden kann. Gegebenenfalls kann der Schlauch auch unter Unterdruck gesetzt werden, sodaß er nahezu flach gedruckt ist.

Bei der Kompostierung ist die Startphase nach einigen Tagen abgeschlossen, das Haufwerk hat sich mechanisch stabilisiert, und die biologische Aktivität durch die Belüftung ist stark angestiegen. Da sich die Temperatur im Inneren Werten nähert, oberhalb denen eine Pasteurisierung erfolgt, die die biologische Aktivität des Haufwerks zumindest beeinträchtigen würde, muß das Haufwerk nun gekühlt werden. Allerdings macht die in der Startphase für die Dissimilation und Atmungsaktivität der Rotteorganismen benötigte Luftmenge nur einen Bruchteil der Luftmenge aus, die für die Kühlung des Haufwerks notwendig ist. Eine erheblich höhere Luftmenge kann nun in einfacher Weise durch einen zweiten Schlauch in das Haufwerk eingeführt werden, der vor der Entfernung des behandelten Haufwerks aus dem Haufwerk herausgezogen wird. Bevorzugt weist der zweite Schlauch höhere Luftdurchsatzfähigkeit auf, sodaß die dem Haufwerk zuführbare Luftmenge ohne besondere Probleme an die dem Haufwerk zuzuführende Luftmenge angepaßt werden kann.

Erste und zweite Schläuche können bereits vor Schüttung des Haufwerks gemeinsam auf die Bodenfläche aufgelegt werden, wobei zuerst nur der bzw. die ersten Schläuche mit dem höheren Luftaustrittswiderstand und dann der bzw. die zweiten Schläuche mit dem niedereren Luftaustrittswiderstand allein oder auch zusätzlich mit der Luftquelle verbunden werden.

In einer zweiten Ausführung ist dabei vorgesehen, daß der erste Schlauch aus dem Haufwerk herausgezogen wird, wobei der zweite Schlauch aktiviert und freigelegt wird. Beispielsweise kann der zweite Schlauch, dessen Querschnitt kleiner ist, unterhalb oder innerhalb des ersten Schlauchs vorgesehen sein.

In einer dritten Ausführung wird der erste Schlauch aus dem Haufwerk herausgezogen und durch den zweiten Schlauch ersetzt. Das Herausziehen des ersten Schlauchs bereitet keine besonderen Probleme, da sich mit Abschluß der Startphase im Haufwerk ein ausreichend mechanisch stabiler Tunnel gebildet hat. In den Tunnel kann auch der zweite Schlauch, dessen Querschnitt bevorzugt kleiner ist, leicht eingeschoben werden, wobei eine besonders vorteilhafte Vorgangsweise für den Wechsel vorsieht, daß der einzuführende zweite Schlauch an den herauszuziehenden ersten Schlauch angekoppelt wird. Gegebenenfalls kann die Querschnittsfläche des zweiten Schlauches vor dem Einführen in das Haufwerk, beispielsweise durch Unterdruck, verringert wird. Der herausgezogene erste Schlauch kann somit nach wenigen Tagen wieder für das Aufsetzen und Behandeln eines Haufwerks verwendet werden.

Gegebenenfalls kann die Querschnittsfläche des zweiten Schlauches vor dem Einführen in das Haufwerk, beispielsweise durch Unterdruck, verringert werden.

In einer weiteren bevorzugten Ausführung ist vorgesehen, daß beim Wechsel des Schlauches auch die Luftquelle gewechselt wird. Beispielsweise kann in der Start- und Tunnelbildungsphase als Luftquelle ein Kompressor oder Seitenkanalverdichter eingesetzt werden, der für die Kühlung des Haufwerks durch ein Radial- oder Axialgebläse ersetzt wird, die bei geringeren Drücken und geringerem Energiebedarf eine wesentlich größere Luftmenge fördern können.

Der anfangs benötigte, stabile, hochdruckfeste erste Schlauch, der beim Schütten des Haufwerks seine Dimensionen beibehält, kann beispielsweise durch einen perforierten Schlauch gebildet sein, dessen Perforierung so dimensioniert ist, daß in seinem Inneren durch den Kompressor od.dgl. ein hoher Druck aufrecht erhalten werden kann. Gewebeschläuche weisen bereits durch ihren Aufbau bedingte Umfangsöffnungen auf, wobei die Luftdurchlässigkeit sich nach der Dichte des Gewebes richtet, und eignen sich daher zur Verwendung im erfindungsgemäßen Verfahren und Einrichtungen. Doppelwandige Schläuche mit einer äußeren Gewebeumhüllung und einem inneren Schlauch aus gummiartigen Material, beispielsweise Feuerwehrschläuche od. dgl. sind besonders geeignet. In diesen können die Umfangsöffnungen beispielsweise dadurch hergestellt werden, daß mittels eines heißen Domes Löcher gestochen werden, wobei im Bereich jedes Loches das Gewebe mit dem gummiartigen Material verschmilzt. Größe, Anzahl und Verteilung der Umfangsöffnungen sind auf die jeweils benötigte Luftmenge abgestimmt, d.h. ein als zweiter Belüftungskanal einsetzbarer Schlauch weist wesentlich mehr Öffnungen größeren Durchmessers auf.

Durch die Verwendung von Schläuchen kann das Verfahren auf jeglichem Untergrund angewandt werden, da auch auf unbefestigtem Boden, etwa in Deponien, das Ausrollen und Herausziehen der Schläuche ohne Schwierigkeit möglich ist.

Nachstehend wird nun die Erfindung an Hand der Figuren der beiliegenden Zeichnung näher beschrieben, ohne darauf beschränkt zu sein.

Es zeigen:
Fig. 1 eine schematische Ansicht eines Haufwerkes,
Fig. 2 einen Teilschnitt durch ein Schlauchende, und
Fig. 3 und 4 Querschnitte durch zwei mögliche Anordnungen beider Schläuche im Haufwerk.

Zum Behandeln eines biologisch aktiven Haufwerkes 1 wird auf eine Bodenfläche 2 zumindest ein mit Umfangsöffnungen 10 aufweisender Schlauch 3 als erster Belüftungskanal ausgelegt, der an einem Ende mit einem Belüftungsaggregat 6 und am anderen Ende mit einem Manometer 7 verbunden wird. Der Schlauch 3, dessen Öffnungen 10 einen hohen Austrittswiderstand aufweisen, wird unter Druck gesetzt und dadurch geringfügig aufgeblasen. Anschließend kann das Material aufgehäuft werden, ohne daß der Schlauch 3 vom aufgeschichteten Material zusammengedrückt wird, wobei die Belüftung zumindest während 2 bis 3 Tagen kontinuierlich aufrechterhalten wird. In diesem Zeitraum verfestigt sich das Haufwerk 1 zumindest so weit, daß der vom Schlauch 3 geformte Tunnel stabil ist. Spätestens dann kann die Belüftung auch in Intervallen erfolgen, ohne daß im drucklosen Zustand der Schlauch 3 vom aufgeschichteten Material zusammengedrückt wird. Ist keine Zwangsbelüftung mehr erforderlich, kann der Schlauch 3 im drucklosen Zustand, gegebenenfalls auch unter Unterdruck, ohne Schwierigkeiten aus dem Haufwerk herausgezogen werden, um eine maschinelle Bearbeitung nicht zu behindern. Bis zur Abtragung des Materials trägt der Tunnel zur passiven Belüftung des Haufwerkes bei.

Besteht die Behandlung des Hautwerkes in der Bildung von Kompost, so wird nach Beendigung der Startphase wesentlich mehr Luft für die Kühlung des Haufwerks benötigt, um die Temperatur so nieder zu halten, daß die biologische Aktivität nicht gehindert bzw. unterbrochen wird. Der Schlauch 3 allein ist für eine erhöhte Luftzufuhr nicht geeignet, sodaß zumindest ein zweiter Schlauch 3' eingesetzt wird. Bevorzugt wird gleichzeitig jeder ohnedies nur einen geringen Luftdurchlaß ermöglichende erste Schlauch 3 außer Funktion gesetzt und aus dem Haufwerk 1 herausgezogen. Wird das Belüftungsaggregat 6 abgeschaltet, so verringert sich der Querschnitt des Schlauches 3 geringfügig. Gegebenenfalls kann der Schlauch 3 durch Unterdruck auch flach gedrückt werden. Der im Querschnitt verringerte Schlauch 3 kann somit ohne Schwierigkeiten aus dem Haufwerk herausgezogen werden.

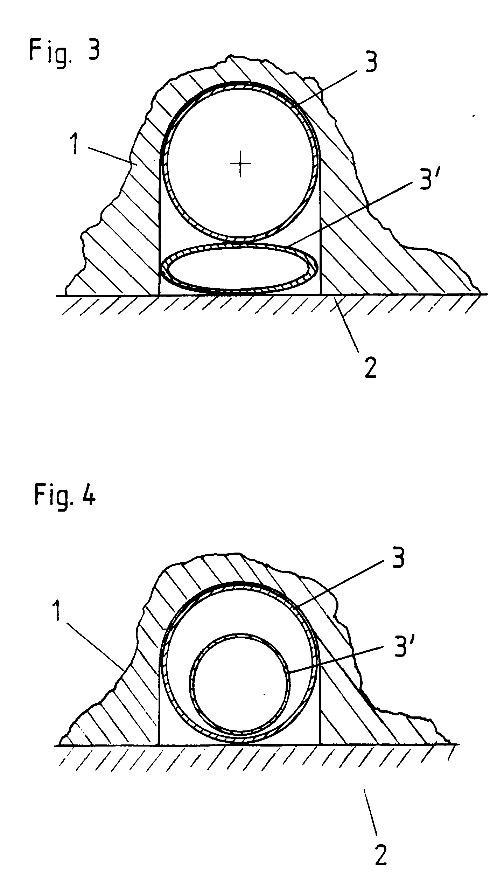

In einer ersten Verfahrensvariante ist der zweite Schlauch 3', dessen Umfangsöffnungen einen wesentlich geringeren Austrittswiderstand bieten, gleichzeitig mit dem ersten Schlauch 3 auf der Bodenfläche 2 verlegt worden, wobei der zweite Schlauch 3' unterhalb (Fig. 3), innerhalb (Fig. 4), gegebenenfalls auch oberhalb des ersten Schlauches 3 angeordnet sein kann. Selbst die Anordnung des ersten Schlauches 3 innerhalb des zweiten Schlauches 3' ist denkbar. Sobald der erste Schlauch 3 herausgezogen wird, wird der im gebildeten Tunnel verbleibende zweite Schlauch 3' freigelegt und kann aktiviert werden.

In der zweiten Verfahrensvariante wird der zweite Schlauch 3' mit dem Ende des ersten Schlauchs 3 verbunden, und erst beim Herausziehen des Schlauches 3 in das Haufwerk 1 eingeführt. Der Schlauch 3' wird bevorzugt an ein höhere Luftmengen förderndes Belüftungsaggregat 6' angeschlossen, und die Belüftung bis zum Abschluß der Behandlung fortgesetzt. Vor Abtragung des Haufwerks 1 wird auch der zweite Schlauch 3' in der beschriebenen Weise herausgezogen.

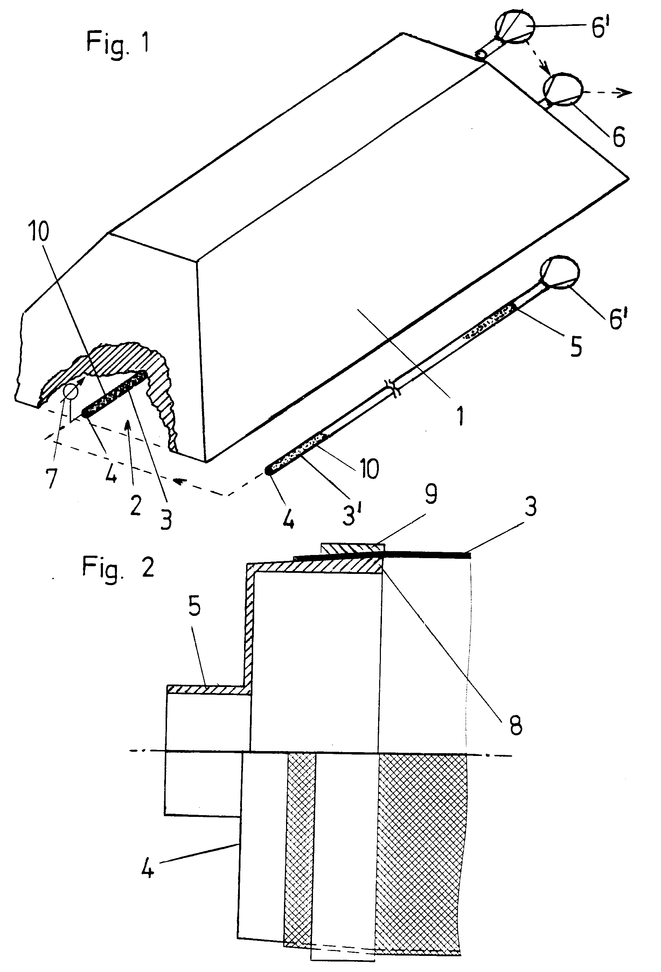

Zum Anschluß an das Belüftungsaggregat 6, 6' und das Manometer 7, gegebenenfalls auch zur Verlängerung des Schlauches 3, 3' ist an jedem Ende, wie Fig. 2 an Hand des ersten Schlauches 3 zeigt, der Schlauch 3 zwischen zwei Ringen 8, 9 geklemmt, wobei die beiden den Schlauch 3 klemmenden Flächen der beiden Ringe 8, 9 konisch sind, sodaß nach dem Einsetzen des Innenringes 8 der Außenring 9 aufgeschoben werden kann, bis der Schlauch 3 fixiert ist. Der erste Schlauch 3 ist, wie in Fig. 2 ersichtlich, mit einer Gewebeumhüllung versehen, die einen Innenschlauch aus Gummi od. dgl. verstärkt. Besonders geeignet sind Feuerwehrschläuche, wobei die Belüftungsöffnungen durch Löcher 10 gebildet sind, die mittels eines heißen Dornes in einer der benötigten Luftaustrittsmenge entsprechenden Anordnung und Umfangsverteilung in den Schlauch 3 eingeschmolzen werden. Der Schlauch 3' kann beispielsweise durch einen einfachen Gewebeschlauch ohne Innenschlauch gebildet sein. Für die Verlängerung des Schlauches 3, 3' und für die Verbindung mit dem Belüftungsagggregat 6, 6' und dem Manometer 7 ist der Innenring 8 mit geeigneten Verbindungsmitteln 5 versehen, beispielsweise mit einem einen Anschlußstutzen tragenden Endflansch 4 od. dgl..

Für größere Haufwerke oder Rottenmieten können mehrere Schläuche 3, beispielsweise in einem Abstand von zwei oder zweieinhalb Metern zueinander, verlegt und vorzugsweise an je ein Belüftungsaggregat 6 angeschlossen werden, sodaß keine Großanlage notwendig ist, und durch Schläuche 3' und Aggregate 6' ergänzt bzw. ersetzt werden. Die Schläuche 3 können auch zur Befeuchtung des Haufwerkes verwendet werden, wenn sie an eine entsprechende Flüssigkeitsleitung angeschlossen werden. Das Haufwerk 1 bzw. die Rottenmiete kann weiters auch mit einer wasserdichten und atmungsaktiven Abdeckung versehen sein.

## Patentansprüche

1. Verfahren zum Behandeln eines biologisch aktiven, auf eine Bodenfläche (2) schüttbaren Haufwerks (1), beispielsweise zum Trocknen von Lebensmitteln oder Agrarprodukten, zum Kompostieren von Abfällen, Klärschlamm od.dgl., wobei auf die Bodenfläche (2) zumindest ein Belüftungskanal mit seitlichen Öffnungen (10) aufgelegt wird, das zu behandelnde Haufwerk (1) auf der Bodenfläche (2) verteilt und durch den mit einer Luftquelle (6, 6') verbundenen Kanal belüftet wird, und jeder Belüftungskanal vor Entfernung des behandelten Haufwerks (1) aus dem Haufwerk (1) herausgezogen wird, dadurch gekennzeichnet, daß als Belüftungskanal zumindest ein Schlauch (3) auf die Bodenfläche (2) aufgelegt wird, durch den die Behandlungsluft in das Haufwerk (1) eingebracht wird.

2. Verfahren nach Anspruch 1, dadurch gekennzeichnet, daß der Schlauch (3) vor der Verteilung des Haufwerks (1) unter Druck gesetzt, und der Druck vor dem Herausziehen aus dem Haufwerk (1) wieder abgebaut wird.

3. Verfahren nach Anspruch 1 oder 2, dadurch gekennzeichnet, daß die Querschnittsfläche des Schlauches (3) vor dem Herausziehen aus dem Haufwerk (1) verringert wird.

4. Verfahren nach einem der Ansprüche 1 bis 3, dadurch gekennzeichnet, daß bei gesteigertem Luftbedarf des Haufwerks (1) die Behandlungsluft durch zumindest einen zweiten Schlauch (3') zugeführt wird, der vor Entfernung des behandelten Haufwerks (1) aus dem Haufwerk (1) herausgezogen wird.

5. Verfahren nach Anspruch 4, dadurch gekennzeichnet, daß anstelle des ersten Schlauches (3) ein zweiter Schlauch (3') mit höheren Luftdurchsatzfähigkeiten verwendet wird.

6. Verfahren nach Anspruch 4 oder 5, dadurch gekennzeichnet, daß beide Schläuche (3, 3') gemeinsam auf die Bodenfläche (2) aufgelegt werden und beim Herausziehen des ersten Schlauches (3) aus dem Haufwerk (1) der zweite Schlauch (3') aktiviert oder freigelegt wird.

7. Verfahren nach Anspruch 6, dadurch gekennzeichnet, daß der zweite Schlauch (3') unterhalb des ersten Schlauches (3) angeordnet wird.

8. Verfahren nach Anspruch 6, dadurch gekennzeichnet, daß der zweite Schlauch (3') innerhalb des ersten Schlauches (3') angeordnet wird.

9. Verfahren nach Anspruch 4 oder 5, dadurch gekennzeichnet, daß vor dem Herausziehen des ersten Schlauches (3) der zweite Schlauch (3') an den ersten Schlauch (3) angekoppelt wird.

10. Verfahren nach Anspruch 9, dadurch gekennzeichnet, daß die Querschnittsfläche des zweiten Schlauches (3') vor dem Einführen in das Haufwerk (1) verringert wird.

11. Verfahren nach einem der Ansprüche 4 bis 10, dadurch gekennzeichnet, daß nach dem Wechsel des Schlauches (3, 3') auch die Luftquelle (6, 6') gewechselt wird.

12. Verfahren nach einem der Ansprüche 4 bis 11, dadurch gekennzeichnet, daß die Querschnittsfläche des zweiten Schlauches (3') vor dem Herausziehen aus dem Haufwerk (1) verringert wird.

13. Einrichtung zum Behandeln eines biologisch aktiven, auf eine Bodenfläche (2) schüttbaren Haufwerks (1), beispielsweise zum Trocknen von Lebensmitteln oder Agrarprodukten, zum Kompostieren von Abfällen, Klärschlamm od.dgl., mit einem auf die Bodenfläche (2) auflegbaren Belüftungskanal, der mit Wandungsöffnungen (10) und an zumindest einem Ende mit einer Verbindungsvorrichtung (4, 5) zum Anschluß an eine Luftquelle (6, 6') bzw. eine Ausziehvorrichtung versehen ist, dadurch gekennzeichnet, daß der Belüftungskanal als Schlauch (3, 3') ausgebildet ist.

14. Einrichtung nach Anspruch 13, dadurch gekennzeichnet, daß der Schlauch (3, 3') ein Gewebeschlauch ist.

15. Einrichtung nach Anspruch 13 oder 14, dadurch gekennzeichnet, daß der Schlauch (3, 3') ein Feuerwehrschlauch ist, dessen gewebebewehrte Gummiwandung mit Löchern (10) versehen ist.

16. Einrichtung nach einem der Ansprüche 13 bis 15, gekennzeichnet durch jeweils zwei wahlweise einsetzbare Schläuche (3, 3'), durch deren Wandungsöffnungen (10) unterschiedliche Luftmengen pro Zeiteinheit in das Haufwerk (1) zuführbar sind.

17. Einrichtung nach Anspruch 16, dadurch gekennzeichnet, daß die beiden Schläuche (3, 3') ineinander angeordnet sind.

18. Einrichtung nach Anspruch 16 oder 17, gekennzeichnet durch zumindest zwei als Luftquelle wahlweise einsetzbare Belüftungsaggregate (6, 6'), die unterschiedlichen Luftmengen in das Haufwerk (1) zuführen.

19. Verfahren zur Herstellung eines Belüftungskanals nach Anspruch 15, dadurch gekennzeichnet, daß die Löcher (10) in dem Feuerwehrschlauch mittels eines Domes hergestellt werden, wobei im Bereich jedes Loches (10) das Gewebe mit der Gummiwandung verschmolzen wird.
